# FASCICULE DE BREVET EUROPEEN

(11) **EP 0 420 720 B1**
(45) Date de publication et mention de la délivrance du brevet: **05.01.1994**
(21) Numéro de dépôt: 90402567.3
(22) Date de dépôt: 18.09.1990
(51) Int. Cl.: F17C 7/00, F17C 13/02, G05D 7/01, B64G 1/40

(54) **Réservoir de gaz sous pression avec contrôle du courant gazeux délivré**
Druckgasgefäss mit kontrollierter Gasabgabe
Pressurised gas bottle with a controlled gas delivery system

(30) Priorité: 29.09.1989 FR 8912733; 22.11.1989 FR 8915343
(43) Date de publication de la demande: 03.04.1991
(73) Titulaire: AEROSPATIALE Société Nationale Industrielle, 75781 Paris Cédex 16 (FR)
(72) Inventeur: Valy, Yves Hervé Guillaume, F-33260 St. Médard en Jalles (FR); Coquet, Pascal Didier, F-33200 Bordeaux (FR); Amagat, Michel, F-33160 St.Aubin Du Médoc (FR)
(74) Mandataire: Bonnetat, Christian

(56) Documents cités:
- DE-C- 112 711
- FR-A- 1 207 128
- US-A- 4 031 917
- PATENT ABSTRACTS OF JAPAN, vol. 10, no. 353 (M-539)[2409], 28 novembre 1986;& JP-A-61 151 715 (TOSHIBA CORP.) 10-07-1986

## Description

La présente invention concerne un réservoir de gaz sous pression pourvu de moyens de contrôle du courant gazeux délivré, la pression du gaz à l'intérieur dudit réservoir pouvant atteindre plusieurs centaines de bars (voir par example DE-C-112 711).

Quoique non exclusivement, la présente invention est particulièrement adaptée à être mise en oeuvre dans des réservoirs composites de type connu, de sorte qu'elle sera décrite ci-après plus spécialement en rapport avec ce type de réservoirs qui sont constitués d'une chemise interne et d'une coque externe d'enroulements filamentaires enrobés de résine synthétique. On sait que dans ces réservoirs composites la chemise interne assure l'étanchéité gazeuse, tandis que la coque d'enroulements filamentaires a pour objet d'assurer la résistance mécanique. De plus, on fait généralement en sorte que la déformation de la chemise interne sous l'effet de la pression interne soit du type plastique, alors que la déformation de la coque externe est élastique. Ainsi, il est possible d'obtenir pour le réservoir une déformation élastique linéaire en fonction de la pression.

A cause de leur excellente résistance mécanique et de leur faible masse, ces réservoirs composites sont largement utilisés dans la technique spatiale pour le stockage de gaz sous haute pression (jusqu'à 800 bars). Par exemple, ils contiennent de l'oxygène, de l'hydrogène ou de l'azote pour assurer les servitudes d'un engin spatial habité, ou bien encore ils stockent les gaz permettant la pressurisation des ergols de propulsion des lanceurs ou satellites.

Bien entendu, pour pouvoir utiliser le gaz stocké dans un tel réservoir, il est nécessaire de contrôler le courant gazeux à la sortie dudit réservoir. A cet effet, on prévoit une succession de détendeurs commandés, dont l'ouverture est asservie à l'évolution de la pression dans le réservoir. Compte-tenu des pressions élevées à l'intérieur du réservoir et des exigences de sécurité et de fiabilité dans le domaine des hautes pressions, de tels détendeurs et leurs commandes sont lourds (de l'ordre de 25 kg), ce qui est fortement pénalisant dans le domaine spatial.

Aussi, l'objet de la présente invention est-il de remédier à cet inconvénient et de prévoir un réservoir de gaz sous pression, avec contrôle du courant gaz eux délivré, permettant d'éviter l'usage des détendeurs précités et donc de réduire fortement le poids total du réservoir et de ses accessoires de fonctionnement.

A cette fin, selon l'invention, le réservoir de gaz sous pression comportant une enveloppe en communication avec un orifice susceptible de relier l'intérieur dudit réservoir avec l'extérieur, ainsi que des moyens de commande de l'overture et de la fermeture de ladite communication est remarquable :
- en ce que ladite enveloppe est réalisée de façon à être élastiquement déformable en fonction de la pression du gaz contenu dans ledit réservoir ; et
- en ce que lesdites moyens de commande sont actionnés, par l'intermédiaire d'un organe d'actionnement lié à ladite enveloppe, par la déformation de ladite enveloppe sous l'effet dudit gaz sous pression, pour former des moyens de contrôle du courant gazeux à travers ledit orifice de façon que :
- au remplissage dudit réservoir, lesdits moyens de contrôle interrompent ladite communication dès que la pression interne dudit réservoir atteint une valeur prédéterminée ; et
- au vidage dudit réservoir, ladite communication est fonction de ladite pression interne.

Ainsi, grâce à la présente invention, c'est la variation de volume de l'enveloppe, sous l'influence de la pression interne du gaz qu'elle contient, qui permet le contrôle du courant gaz eux à travers ledit orifice. Il n'est donc plus nécessaire de prévoir de lourds et coûteux dispositifs de contrôle extérieurs.

On remarquera que, généralement, notamment en ce qui concerne leur fixation, il est désavantageux que les réservoirs de gaz soient déformables, puisqu'alors il est impératif de tenir compte de leur variation de volume. Grâce à la présente invention, cette variation de volume devient un avantage en ce qui concerne le contrôle du courant gazeux.

De préférence, ledit réservoir comporte un élément rigide, disposé à l'intérieur de ladite enveloppe et en appui par une de ses extrémités contre ledit réservoir, lesdits moyens de contrôle étant commandés par l'autre desdites extrémités dudit élément rigide.

Cet élément rigide peut être fixé par une de ses extrémités audit réservoir, l'autre desdites extrémités traversant ladite ouverture.

Il est avantageux que l'enveloppe du réservoir conforme à la présente invention présente une forme de révolution et que ledit élément rigide soit disposé le long de l'axe de ladite enveloppe. Lorsque, notamment, ladite enveloppe est sphérique pour pouvoir résister à des pressions élevées, ledit élément rigide est disposé selon un diamètre de ladite enveloppe.

Avantageusement, le réservoir conforme à la présente invention comporte un palier de coulissement disposé dans ladite ouverture pour guider l'extrémité correspondante dudit élément rigide, ledit palier de coulissement permettant la libre communication gazeuse entre ledit orifice et ladite enveloppe.

On remarquera qu'il est particulièrement avantageux que l'enveloppe du réservoir de la présente invention ait la structure composite chemise interne - coque externe filamentaire, car alors il est possible :
- par une disposition judicieuse des enroulements filamentaires de la coque externe, de favoriser la déformation élastique de l'enveloppe parallèlement à ladite tige rigide ; et/ou
- par mise sous précontrainte, par la coque élastique, de la chemise interne rendue plastiquement déformable, d'obtenir parallèlement audit élément rigide une dilatation et une rétraction de l'enveloppe directement proportionnelle à la pression du gaz contenu dans le réservoir.

Dans un mode de réalisation particulièrement simple, lesdits moyens de contrôle du courant gazeux comportent une soupape susceptible de coopérer avec un siège pratiqué dans une paroi, séparant ladite ouverture dudit orifice et percée d'un passage traversé avec jeu par ledit élément rigide.

Ainsi, comme on le verra plus en détail par la suite, lors du remplissage dudit réservoir de gaz, ladite soupape joue le rôle de sécurité, empêchant de remplir le réservoir au-delà d'une valeur nominale de pression de remplissage. On remarquera que, généralement, les dispositifs de sécurité connus, prévus pour éviter l'explosion d'un réservoir de gaz lors de son remplissage, sont constitués d'une soupape d'échappement et non pas d'une soupapge d'arrêt, comme cela est le cas dans la présente invention.

Le réservoir de l'invention, rempli de gaz à ladite valeur nominale de remplissage et associé à son dispositif d'arrêt, peut rester dans cet état de façon stable. En revanche, des que le dispositif d'arrêt est ouvert, le réservoir peut délivrer le gaz qu'il contient à l'extérieur.

Une telle soupape peut ne commander que l'ouverture et la fermeture dudit réservoir. Toutefois, de préférence, elle présente, ainsi que son siège, une section évolutive, afin de délimiter pour le courant gazeux une section de passage variable en fonction de la pression interne dudit réservoir.

Lesdits moyens de contrôle du courant gaz eux peuvent, en variante ou en combinaison, comporter un noyau à section variable susceptible de coopérer avec un passage pratiqué dans une paroi séparant ladite ouverture dudit orifice, pour offrir au courant gaz eux une section de passage variable en fonction de la pression interne dudit réservoir.

Lesdits moyens de contrôle du courant gaz eux peuvent également comporter un volet mobile. On prévoit alors, par exemple, une came solidaire dudit élément rigide pour commander ledit volet mobile.

Dans un mode avantageux de réalisation, ledit orifice est en communication avec ladite ouverture à travers deux passages de diamètres différents, montés en parallèle, le plus grand desdits passages étant obturable par ledit volet mobile.

Ledit dispositif d'arrêt peut être constitué par une vanne d'arrêt, extérieure audit réservoir. Toutefois, de préférence, ledit réservoir comporte des moyens pour bloquer ledit élément rigide en translation lorsque, ledit réservoir étant rempli, le courant gazeux entre ledit orifice et ladite ouverture est interrompu par lesdits moyens de contrôle. Ainsi, de tels moyens de blocage forment un dispositif d'arrêt interne au réservoir, qui peut être utilisé seul ou en combinaison avec une vanne d'arrêt extérieure. De tels moyens de blocage peuvent être du type pointeau ou analogue et, éventuellement, ils peuvent être prévus pour être commandés à distance.

Selon une première variante de réalisation de la présente invention concernant la liaison dudit organe d'actionnement à l'enveloppe, le réservoir de gaz sous pression est remarquable en ce qu'il comporte une structure déformable disposée à l'intérieur de ladite enveloppe et reliée en plusieurs points à celle-ci, ladite structure déformable commandant la position dudit organe d'actionnement

De préférence, on prévoit des moyens élastiques tendant à presser ladite structure déformable contre la paroi interne de ladite enveloppe.

Selon une autre variante de la présente invention concernant également la liaison dudit organe d'actionnement à ladite enveloppe, le réservoir du gaz sous pression est remarquable en ce qu'il comporte un élément rigide, extérieur audit réservoir, lié, d'un côté, à la paroi dudit réservoir et, de l'autre côté, audit organe d'actionnement.

Avantageusement, ledit organe d'actionnement forme un axe de support en coulissement pour ladite enveloppe.

Selon un aspect de la présente invention concernant la liaison entre l'organe d'actionnement et les moyens de contrôle, le réservoir de gaz sous pression est remarquable en ce que, entre ledit organe d'actionnement et lesdits moyens de contrôle, est disposé un système hydraulique de transmission de mouvement.

De préférence, ledit système hydraulique est constitué de l'ensemble de deux vérins de diamètres différents disposés en série de façon que les deux pistons dudit système hydraulique délimitent entre eux une chambre intermédiaire emplie d'un fluide hydraulique et ledit organe d'actionnement est relié au piston de plus grand diamètre, tandis que lesdits moyens de contrôle sont reliés au piston de plus petit diamètre.

Par ailleurs, il est avantageux de prévoir des moyens élastiques tendant à presser lesdits pistons en direction dudit organe d'actionnement.

Selon une variante de réalisation concernant lesdits moyens de contrôle, le réservoir de gaz sous pression est remarquable en ce que lesdits moyens de contôle du courant gazeux comportent un système de guillotine déplacé par ledit organe d'actionnement, transversalement au déplacement relatif de celui-ci par rapport à ladite enveloppe.

De préférence, une extrémité dudit organe d'actionnement présente la forme d'une rampe contre laquelle ledit système de guillotine est pressé par des moyens élastiques.

Selon une autre variante de réalisation concernant lesdits moyens de contrôle, le réservoir de gaz sous pression est remarquable en ce que lesdits moyens de contrôle du courant gazeux comportent un volet rotatif qui est actionné par ledit organe d'actionnement et dont l'axe de rotation est parallèle à la direction du déplacement relatif dudit organe d'actionnement par rapport à ladite enveloppe.

Avantageusement, la rotation dudit volet rotatif est commandée par ledit organe d'actionnement, par l'intermédiaire d'un sytème à rampe hélicoïdale.

Selon encore une autre variante de réalisation concernant lesdits moyens de contrôle, le réservoir de gaz sous pression est remarquable en ce que lesdits moyens de contrôle du courant gazeux comportent un volet rotatif, qui est actionné par ledit organe d'actionnement par l'intermédiaire d'un système à crémaillère et dont l'axe de rotation est orthogonal à la direction de déplacement relatif dudit organe d'actionnement par rapport à ladite enveloppe.

Les figures du dessin annexé feront bien comprendre comment ces diverses variantes de réalisation peuvent être réalisées. Sur ces figures, des références identiques désignent des éléments semblables.

La figure 1 illustre schématiquement une application possible du réservoir conforme à la présente invention.

La figure 2 montre, en coupe axiale partielle, une première forme de réalisation du réservoir conforme à la présente invention.

La figure 3 montre, a plus grande échelle, la soupape du réservoir de la figure 2.

La figure 4 est un diagramme illustrant le fonctionnement dudit réservoir.

Les figures 5 et 6 montrent, à échelle agrandie, des variantes de réalisation des moyens de contrôle du réservoir de la figure 2.

La figure 7 montre, en coupe axiale partielle, une seconde forme de réalisation du réservoir conforme à la présente invention.

La figure 8 est un schéma montrant, à échelle agrandie, le profil de la came utilisée dans la forme de réalisation de la figure 7, avec indication de la position du palpeur en fonction du temps t.

Les figures 9a, 9b, 9c et 9d sont des diagrammes illustrant le fonctionnement du réservoir de la figure 7.

Les figures 10 et 11 illustrent, schématiquement en coupe axiale, des réservoirs conformes à l'invention pourvus de variantes de réalisation pour les moyens reliant l'organe d'actionnement à l'enveloppe dudit réservoir.

Les figures 12 à 14 illustrent, schématiquement en coupe, des variantes de moyens de liaison entre ledit organe d'actionnement et lesdits moyens de contrôle du courant gazeux.

Les figures 15 à 17 montrent, schématiquement en coupe, des variantes de réalisation desdits moyens de contrôle du courant gazeux.

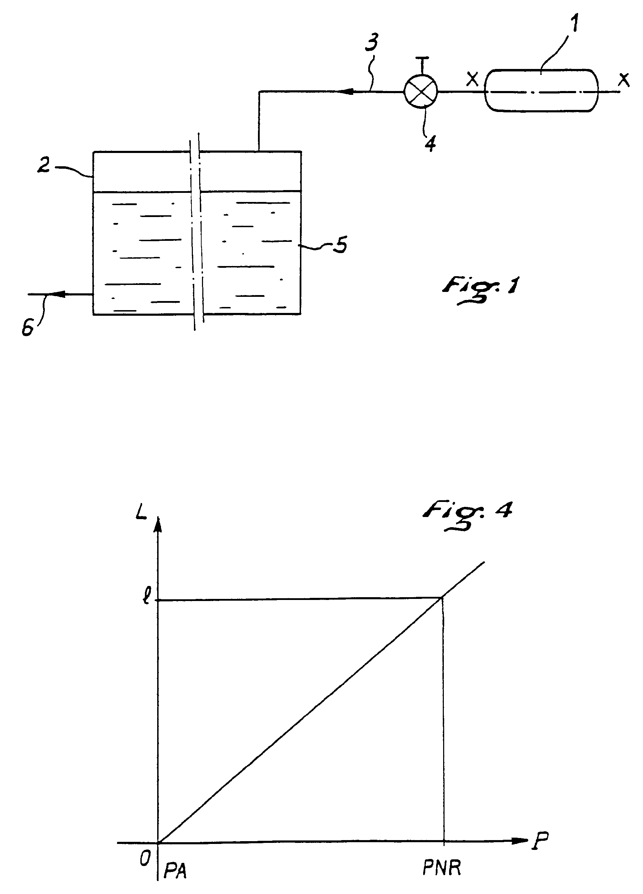

Sur la figure 1, on a représenté un réservoir de gaz sous pression 1 conforme à l'invention destiné à alimenter en gaz une enceinte 2, par l'intermédiaire d'une liaison 3 sur laquelle est montée une vanne d'arrêt 4. L'enceinte 2, qui a un volume important, contient un liquide 5, destiné à être chassé hors de l'enceinte 2, à travers une sortie 6, sous la pression du gaz préalablement stocké dans ledit réservoir 1. Pour des raisons d'encombrement et de poids, le volume du réservoir 1 doit être petit, de sorte que la pression initiale du gaz dans celui-ci doit être élevée pour assurer au liquide 5 une pressurisation supérieure à un seuil déterminé (par exemple 10 bars), même lorsqu'il ne reste que peu de liquide 5 dans l'enceinte 2.

Sur la figure 1, le réservoir 1 est représenté sous la forme d'une bouteille cylindrique d'axe X-X, dont les extrémités sont des dômes, par exemple hémisphériques.

Comme on peut le voir sur la figure 1, aucun dispositif extérieur au réservoir 1 n'est prévu pour contrôler le courant gaz eux dans la liaison 3, lorsque la vanne d'arrêt 4 est ouverte. En effet, ladite bouteille 1 comporte dans son intérieur un dispositif à tige rigide du type décrit ci-après, ladite tige étant disposée le long dudit axe X-X.

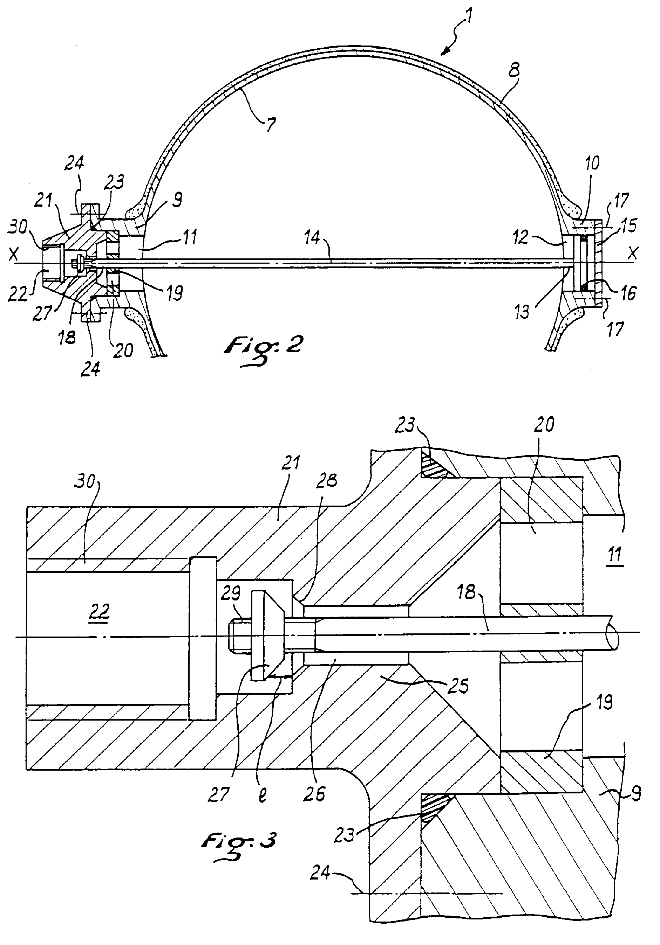

Dans le mode de réalisation de la figure 2, le réservoir t présente une forme sphérique. Son enveloppe comporte une chemise interne sphérique 7, réalisée en un métal tel que par exemple l'aluminium ou le titane, supportant une coque 8 constituée d'enroulements filamentaires composés de fibres résistantes (verre, carbone, kevlar (marque déposée), etc...) enrobées de résine polymérisée.

La chemise interne métallique 7 est pourvue de deux embouts 9 et 10, diamètralement opposés, délimitant respectivement des ouvertures 11 et 12.

Le réservoir 1 a avantageusement subi une opération préparatoire de mise en pression (l'un des embouts 9 et 10 étant obturé, tandis que l'autre sert à l'introduction d'un fluide sous pression) telle que la limite de déformation élastique de la chemise métallique interne soit dépassée, sans que ce soit le cas pour la coque 8, dont la limite de déformation élastique est beaucoup plus élevée. Ainsi, la déformation par dilatation de la chemise métallique interne passe dans le domaine plastique et, lors du retour à la pression atmosphérique du réservoir, ladite chemise métallique interne est en état de précontrainte par l'action élastique de la coque 8. Il en résulte de plus que, si le réservoir est soumis à une mise en pression ultérieure supérieure à celle de ladite opération préparatoire, la déformation du réservoir devient proportionnelle à la pression appliquée.

L'embout 10 sert à la fixation d'une extrémité 13 d'une tige rigide 14 sur ledit réservoir. La tige rigide 14 est disposée à l'intérieur du réservoir 1, le long du diamètre X-X de celui-ci reliant les centres desdits embouts 9 et 10. L'extrémité 13 de la tige 14 est solidaire d'un bouchon 15, susceptible d'obturer de façon étanche ledit embout 10 grâce à un joint 16, des moyens de fixation 17 (seulement indiqués par la ligne de leur axe) permettant de rendre ledit bouchon (et donc la tige 14) solidaire du réservoir 1.

L'extrémité 18 de la tige 14, opposée à l'extrémité 13, traverse l'ouverture 11, en étant guidée par un palier de coulissement 19 disposé dans celle-ci et percé d'ouvertures permettant les échanges gazeux de part et d'autre dudit palier 19.

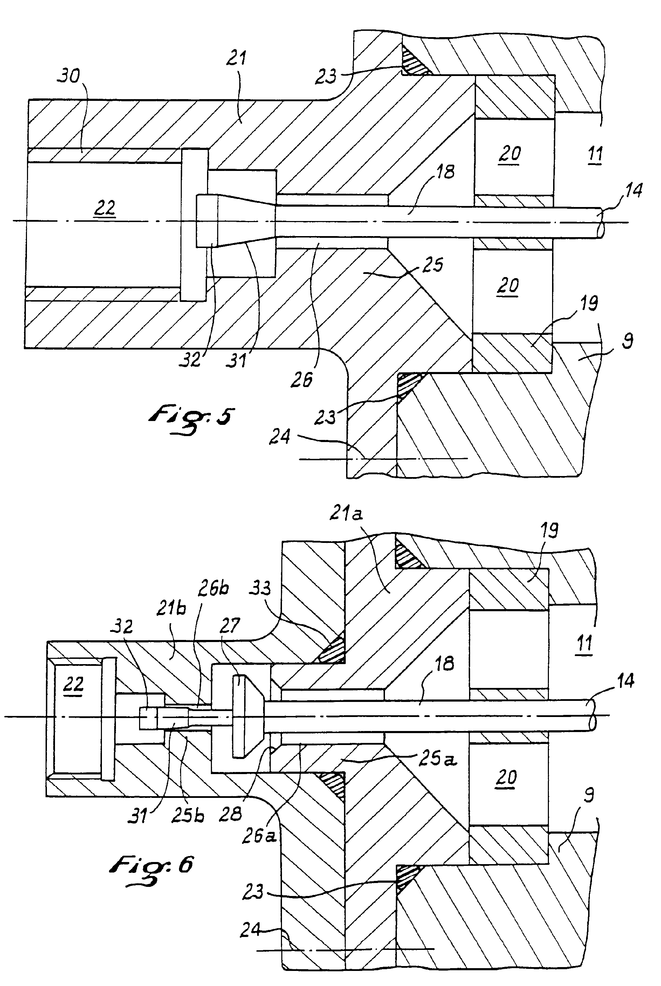

Comme cela est également représenté à plus grande échelle par la figure 3, un raccord 21, délimitant un orifice 22, est fixé sur l'embout 9 de façon étanche, grâce à un joint 23 et à des moyens de fixation 24 (seulement représentés par la ligne de leur axe). Le raccord 21 comporte une paroi transversale 25, percée d'un passage 26 traversé avec jeu par l'extrémité 18 de la tige 14.

Du côté de l'orifice 22, l'extrémité 18 de la tige 14 est solidaire d'une tête de soupape 27, tandis que la face correspondante de la paroi 25 comporte un siège 28 pour ladite tête de soupape 27. A des fins de réglage en position de la tête de soupape 27 par rapport au siège 28, ladite tige de soupape 27 peut se présenter comme un écrou vissable sur un filetage 29 de ladite extrémité 18 de la tige 14.

Au repos, la tête de soupape 27 et le siège 28 se trouvent dans la position relative illustrée par les figures 2 et 3, pour laquelle ladite tête de soupape 27 est fortement décollée de son siège 28, de sorte que le passage 26 assure la communication gazeuse entre l'orifice 22 et l'ouverture 11 (c'est-à-dire entre l'orifice 22 et l'intérieur du réservoir 1) à travers le palier 19.

Ainsi, si on relie l'orifice 22 à une source de gaz sous pression (non représentée) grâce à un filetage 30 prévu à cet effet, on peut remplir le réservoir 1 avec ledit gaz.

Au fur et à mesure que la pression croît à l'intérieur du réservoir 1, celui-ci se dilate, de sorte que le siège 28 se rapproche de la soupape 27, l'extrémité 18 de la tige 14 glissant dans le palier 19. Lorsque la pression interne au réservoir 1 atteint une valeur telle que le siège 28 se plaque contre la soupape 27, le réservoir 1 est obturé et il devient impossible d'introduire du gaz supplémentaire. On remarque donc que la pression à l'intérieur du réservoir conforme à la présente ne peut dépasser une valeur nominale de remplissage, dépendant à la fois de la faculté de dilatation du réservoir 1 et de la position initiale de la tête de soupape 27 par rapport au siège 28.

Ainsi, il est possible de fixer la valeur nominale de remplissage par la construction même du réservoir 1, un ajustement pouvant intervenir grâce à la tête de soupape réglable.

Après remplissage dudit réservoir 1 à sa valeur nominale de remplissage et séparation de la source de gaz de remplissage, ledit réservoir est relié à la vanne d'arrêt 4 (voir la figure 1) grâce à son filetage 30. Tant que la vanne d'arrêt 4 est fermée, le réservoir 1 reste lui-même obturé. En effet, bien que l'obturateur constitué par la soupape 27 et le siège 28 ne soit pas parfaitement étanche à cause de la pression élevée règnant à l'intérieur du réservoir 1, les légères fuites de gaz qui se produisent s'accumulent entre la vanne d'arrêt 4 et le réservoir 1, de sorte que la soupape 27 est en équilibre de pression. En revanche, des que l'on ouvre la vanne d'arrêt 4 la soupape 27 est soumise, d'un côté, à la faible pression régnant dans l'enceinte 2 et, de l'autre, à la pression interne élevée du réservoir 1. Par ailleurs, l'élasticité propre du réservoir 1 dilaté tend à comprimer celui-ci. On remarquera que dans le cas où le réservoir 1 a subi l'opération préparatoire mentionnée ci-dessus rendant plastique la chemise métallique interne 7, cette élasticité est uniquement assurée par la coque 8 qui comprime élastiquement la chemise interne 7, qui se rétracte plastiquement.

Dans ces conditions, dès que l'on ouvre la vanne d'arrêt 4, la tête de soupape 27 se décolle de son siège 28 et le gaz passe du réservoir 1 à l'enceinte 2 à travers l'ouverture 11, les ouvertures 20 du palier 19, le passage 26, l'espace entre la tête de soupape 27 et le siège 28, l'orifice 22, la vanne d'arrêt ouverte 4 et la liaison 3. La pression baisse donc dans le réservoir 1, et celui-ci se rétracte. En se rétractant, le réservoir 1 entraîne un coulissement relatif de l'extrémité 18 de la tige 14 par rapport au palier 19, de sorte que la tête de soupape 27 s'écarte un peu plus du siège 28.

Ainsi, au fur et à mesure du transfert de gaz entre le réservoir 1 et l'enceinte 2, la tête de soupape 27 s'écarte progressivement de son siège 28, augmentant la section du passage des gaz entre ladite tête de soupape 27 et le siège 28. L'évolution de cette section de passage des gaz de l'obturateur 27,28 dépend bien évidemment des profils relatifs de la tête de soupape 27 et du siège 28, ainsi que de la rétraction du réservoir 1 sous l'effet de la chute de pression interne et de l'élasticité dudit réservoir.

Préalablement au remplissage du réservoir 1 et à son utilisation pour alimenter l'enceinte 2, il est possible de procéder à des essais expérimentaux pour déterminer la dilatation linéaire L dudit réservoir 1 le long de l'axe X-X, en fonction de la pression P. On obtient alors une variation linéaire, telle que celle représentée sur la figure 4. Il est donc possible de déterminer la valeur l de cette dilatation linéaire entre la pression atmosphérique PA et une pression nominale de remplissage PNR désirée et d'ajuster l'écart initial entre la tête de soupape 27 et son siège 28 à cette valeur l, tel que cela est représenté sur la figure 3.

De plus, grâce au diagramme de la figure 4, on connaît pour chaque valeur de la pression P, comprise entre PA et PNR, quelle est la position relative de la tête de soupape 27 par rapport à son siège 28. Il devient alors possible de donner à la soupape 27 et à son siège 28 une évolution de profil telle que, à chaque valeur de la pression P comprise entre PA et PNR corresponde une valeur déterminée de la section de passage pour le gaz, délimitée entre ladite soupape et ledit siège.

Comme, par ailleurs, à la décharge du réservoir 1, la chute de pression à l'intérieur de celui-ci en fonction du temps dépend, outre de ladite section de passage, des conditions de pression et de volume existant dans le réservoir 1 et dans l'enceinte 2, on voit qu'il est possible, pour ces conditions, d'ajuster le profil de la tête de soupape 27 et de son siège 28, pour obtenir dans la liaison 3 une variation désirée du débit de décharge du gaz en fonction du temps.

Sur les figures 2 et 3, on a supposé que les surfaces coopérantes de la tête de soupape 27 et de son siège étaient coniques. Ainsi, dans ce cas, tant que les deux surfaces coopérantes sont en regard l'une de l'autre, la section de passage est formée par une surface annulaire dont la largeur croît avec l'écartement de la soupape par rapport au siège. Par ailleurs, il est évident que, pour une position relative de la soupape par rapport à son siège, la section de passage dépend de l'angle au sommet des surfaces coniques coopérantes de la tête de soupape 27 et du siège 28.

Dans la variante de réalisation illustrée par la figure 5, on retrouve les différents éléments 18 à 26 et 30 de la figure 3, à l'exception de la tête de soupape 27, du siège 28 et du filetage 29. Dans le dispositif représenté, l'extrémité 18 de la tige 14 porte un noyau présentant une partie conique 31, s'évasant jusqu'à une partie cylindrique d'extrémité 32, dont le diamètre extérieur lui permet de coulisser à frottement doux dans le passage 26. Au repos, (position représentée sur la figure 5), la partie cylindrique d'extrémité 32 et la partie évasée conique 31 dudit noyau font saillie hors du pasage 26 en direction de l'orifice 22, de sorte qu'une section de passage de gaz de remplissage est ménagée entre l'extrémité 18 de la tige 14 et le passage 26. Au cours du remplissage en gaz du réservoir 1, cette section de passage diminue progressivement, la partie évasée conique 31 du noyau pénétrant dans le passage 26. A la fin du remplissage, la partie cylindrique d'extrémité 32 du noyau pénètre dans le passage 26, pour y former bouchon. On voit que le processus inverse se produit à la décharge du gaz hors du réservoir 1, la section de passage croissant au fur et à mesure que la partie évasée conique 31 sort du passage 26.

Dans le dispositif de la figure 5, on peut obtenir une grande progressivité de la variation de la section de passage, grâce au fait que la partie évasée conique 31 peut être longue pour coopérer longtemps avec la paroi du passage 26, pendant la translation relative de la tige 14 par rapport à la paroi 25. Toutefois, en position de remplissage, le bouchon 32 assure une moins bonne obturation du passage 26 que la soupape 27.

Aussi, dans la variante de réalisation montrée par la figure 6, on a prévu, à la fois, l'obturateur 27,28 de la figure 3 et l'obturateur 31,32 de la figure 5, afin d'obtenir une bonne progressivité de la variation de la section de passage pour le gaz au cours de la décharge et une bonne obturation lorsque le réservoir est rempli.

Dans le dispositif de la figure 6, le raccord 21 est constitué de deux parties 21a et 21b assemblables de façon étanche grâce à un joint 33. L'extrémité 18 de la tige 14 est conformée pour présenter, à la fois, une tête de soupape 27 et les parties de noyau 31 et 32. La tête de soupape 27 peut coopérer avec le siège 28 ménagé à l'extrémité du passage 26a, prévu dans la paroi 25 a de la partie de raccord 21a. Les parties de noyau 31 et 32 sont prévues pour coopérer avec le passage 26b prévu dans la paroi 25b de la partie de raccord 21b. La disposition relative des passages 26a, 26b, de la tête de soupape 27, du siège 28 et des parties de noyau 31 et 32 est prévue pour que la tête de soupape 27 soit en appui contre le siège 28 lorsque la partie 32 se trouve dans le passage 26b.

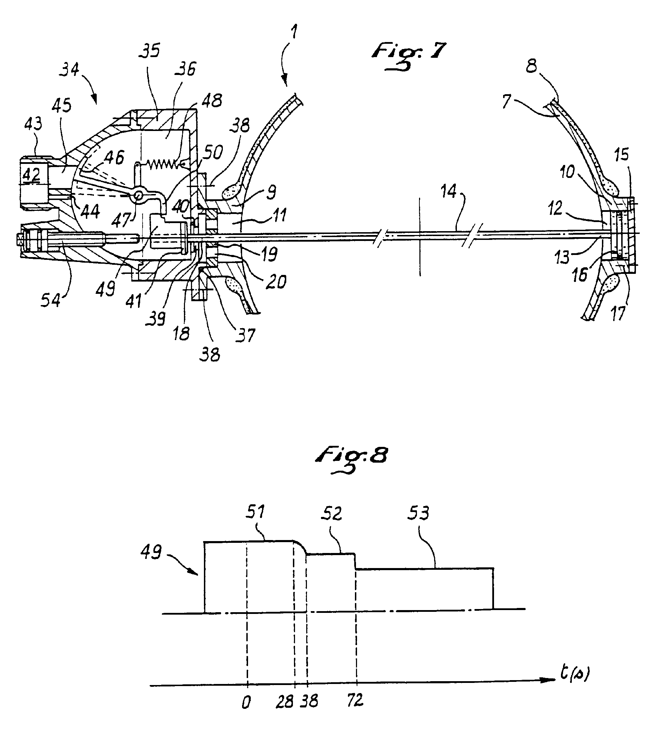

Dans la variante de réalisation du réservoir conforme à la présente invention montrée par la figure 7, on retrouve les différents éléments 7 à 20 décrits en regard de la figure 3. Cependant, dans ce cas, le raccord 21 est remplacé par un dispositif à clapet mobile 34. Ce dispositif à clapet mobile 34 comporte une enveloppe étanche 35, délimitant une chambre interne 36. Il est fixé de façon étanche à l'embout 9 par son enveloppe 35 grâce à un joint 37 et à des moyens de fixation 38 (seulement représentés par leur axe).

L'extrémité 18 de la tige 14 pénètre à l'intérieur de l'enveloppe 35, dans la chambre 36, grâce à un passage 39 pratiqué dans la paroi de ladite enveloppe 35. Le bord du passage 39 dirigé vers la chambre 36 est conformé en siège pour une soupape 41, solidaire de l'extrémité 18 et disposée à l'intérieur de ladite chambre 36.

Par ailleurs, le dispositif 34 comporte un orifice 42 pouvant le relier à l'extérieur, par temple au moyen d'un filetage 43. Cet orifice 42 est relié avec la chambre 36 par deux passages 44 et 45, le passage 45 étant grand par rapport au passage 44.

A l'intérieur de la chambre 36 est monté un clapet mobile 46, par exemple basculant autour d'un axe 47, et destiné à commander le passage de gaz à travers le passage 45. Un ressort 48 agit sur le clapet mobile dans le sens pour lequel celui-ci dégage le passage 45, tandis qu'une came 49, solidaire de l'extrémité 18 de la tige 14 et coopérant avec un palpeur 50 solidaire du clapet, peut commander la fermeture dudit passage 45 par l'obturateur 46.

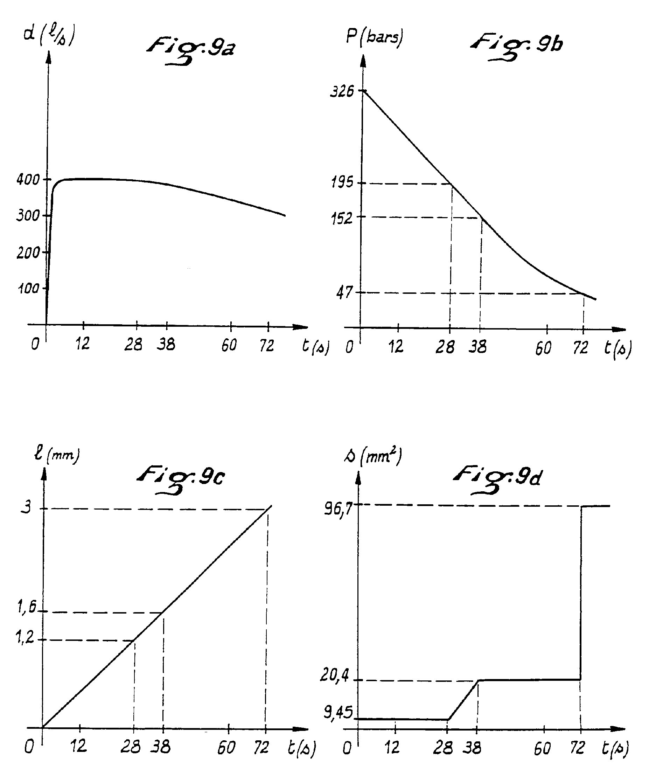

Comme le montre à plus grande échelle la figure 8, la came 49 présente par exemple un profil en gradins 51,52,53.

De plus, un pointeau 54 traverse l'enveloppe 35 de façon étanche et est susceptible de coopérer avec l'extrémité 18 de la tige 14.

Au repos, l'extrémité 18 de la tige 14 pénètre suffisamment dans la chambre 36 pour que, d'une part, la soupape 41 soit écartée du siège 40 et, d'autre part, le palpeur 50 coopère avec le gradin 53 le plus bas de la came 49, de sorte que sous l'action du ressort 48 le clapet 46 dégage complètement le passage 45. Si, alors, on relie l'orifice 42 (par l'intermédiaire du filetage 43) à une source de gaz sous pression (non représentée), ce gaz pénètre dans le réservoir 1 à travers l'orifice 42, les passages 44 et 45 la chambre 36, le passage 39, les ouvertures 20 et l'ouverture 11. Il en résulte une dilatation du réservoir 1, de sorte que l'extrémité 18 de la tige 14 se rapproche du siège 40 et que le palpeur 50 glisse sur le gradin 53 en direction du gradin intermédiaire 52. Le remplissage en gaz se poursuivant, il en est de même de la dilatation du réservoir 1, de sorte que le palpeur 50 est obligé de quitter le gradin 53, pour venir en appui sur le gradin intermédiaire 52. Il en résulte que le clapet 46 se déplace à l'encontre de l'action du ressort 48 et vient obturer en partie le passage 45. Le remplissage en gaz du réservoir 1 continue à travers le passage 45 réduit et le passage 44, et le palpeur 50 glisse sur le gradin intermédiaire 52, jusqu'à venir sur le gradin le plus haut 51.

A ce moment, le clapet 46 obture complètement le passage 45, mais pas le passage 44 et le remplissage du réservoir se poursuit à travers ledit passage 44, jusqu'à ce que la soupape 41 vienne s'appuyer contre le siège 40. Le réservoir 1 est alors rempli à sa pression de valeur nominale.

Le pointeau 54 peut alors être actionné pour bloquer la soupape 41 contre le siège 40, de sorte qu'aucune fuite de gaz ne se produit hors du réservoir 1.

Après séparation de la source de gaz de remplissage, le réservoir 1 peut être relié à l'enceinte 2 à travers la vanne d'arrêt 4, grâce au filetage 43. Après actionnement du pointeau 54 pour débloquer la tige 14 et ouverture de la vanne d'arrêt 4 (qui éventuellement peut être supprimée), l'enceinte 2 peut être alimentée à partir du réservoir 1.

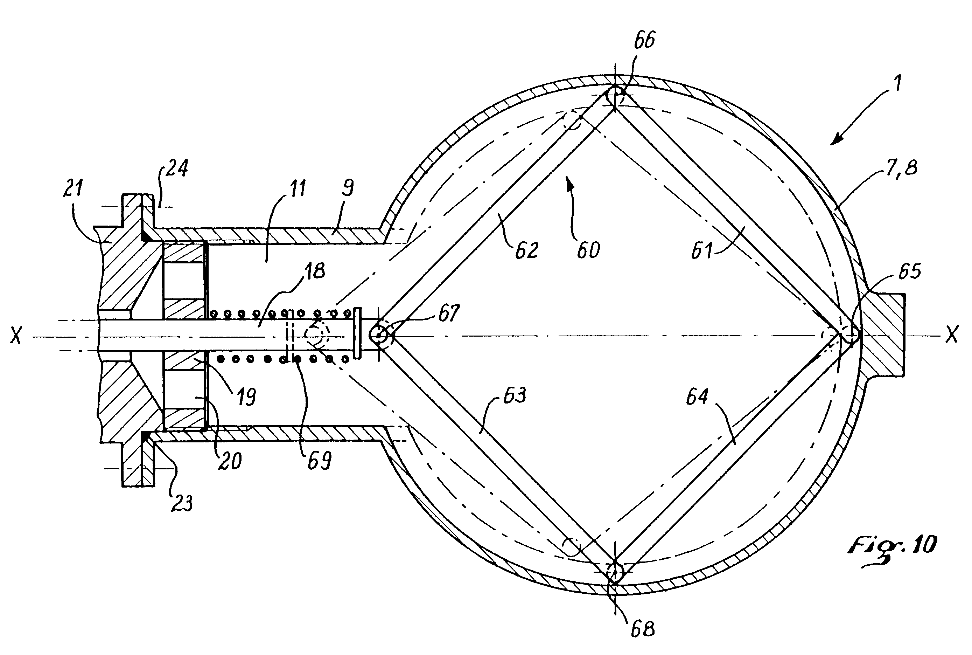

Sur les figures 9a,9b, 9c et 9d, on a représenté un exemple d'alimentation de l'enceinte 2 en supposant que la valeur nominale de la pression de remplissage PNR du réservoir 1 était de 326 bars et que l'on désirait, en fonction du temps t (en secondes), une variation du débit d (en litres par seconde) dans la liaison 3, telle que celle représentée par la figure 9a. De la façon mentionnée à propos de la figure 3, on a donc calculé en conséquence les sections de passage du gaz à la sortie du réservoir 1.

A l'instant t = 0, correspondant à l'ouverture de la vanne d'arrêt 4, la pression à l'intérieur du réservoir 1 est égale à 326 bars, le passage 45 est obturé par le clapet 46, car le palpeur 50 est repoussé par le gradin 51 (voir également la figure 8) et la soupape 41 est en appui contre le siège 40. De la façon indiquée ci-dessus en regard de la figure 3, la décharge s'amorce à travers l'obturateur 40,41 , dans ce cas grâce au passage 44 présentant une section de passage s de 9,45 mm2 (voir la figure 9d). Il en résulte une chute de pression dans le réservoir 1 (voir la figure 9b) et l'écartement de la tête de soupape de son siège (voir la figure 9c). Au bout de 28s, la pression à l'intérieur du réservoir 1 est passée de 326 bars à 195 bars et l'écartement e de la tête de soupape 41 du siège 40 est passé de 0 à 1,2 mm.

De plus, à partir de l'instant t = 28s et jusqu'à l'instant t = 38s, le palpeur 50 passe du gradin supérieur 51 au gradin intermédiaire 52, de sorte que la section de passage s passe de 9,45 mm2 à 20,4 mm2, le clapet 46 dégageant partiellement le passage 45. Entre les instants t = 28 s et t = 38s, la pression P à l'intérieur du réservoir 1 chute de 195 bars à 152 bars, tandis que l'écartement e passe de 1,2 mm à 1,6 mm.

Entre les instants t = 28s et t = 72s, la section de passage s reste égale à 20,4 mm2, car le palpeur est toujours en appui sur le gradin intermédiaire 52, et la chute de pression interne au réservoir 1 se poursuit jusqu'à 47 bars, tandis que l'écartement e passe de 1,6 mm à 3 mm.

A l'instant t = 72s, le palpeur passe du gradin intermédiaire 52 au gradin inférieur 53, libérant totalement le passage 45. La section de passage croît brusquement jusqu'à 96,7 mm2.

De ce qui précède, on voit que connaissant la dilatation linéaire du réservoir 1 le long de l'axe X-X, (par exemple grâce à des essais expérimentaux ayant fourni une courbe semblable à celle de la figure 4), on connaît la rétraction linéaire dudit réservoir, qui est inverse de ladite dilatation, puisque la déformation est élastique.

Il est donc possible d'ajuster la came 49 pour obtenir des sections de passage appropriées qui, compte tenu de la chute de pression donnée par la figure 9b, permettent la variation de débit montrée par la figure 9a.

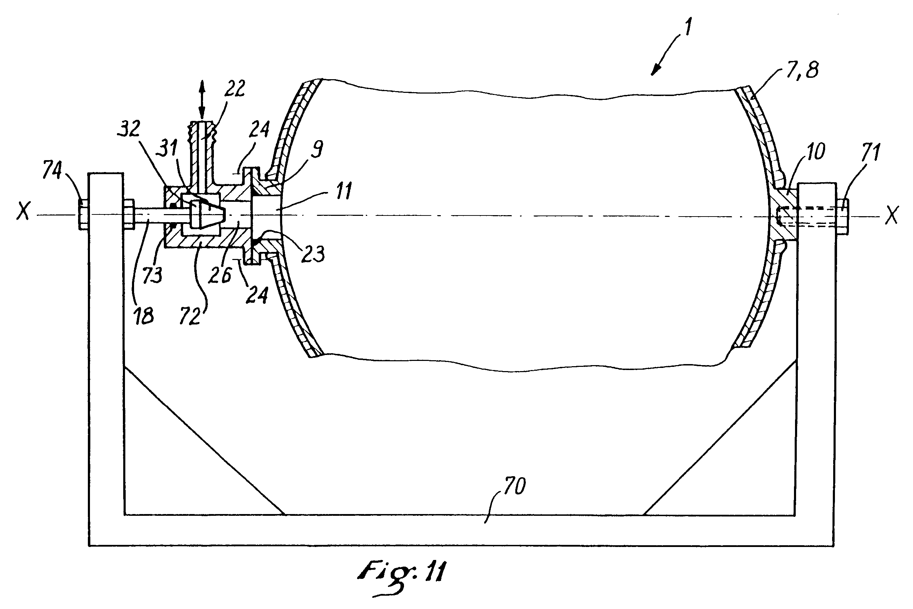

Le mode de réalisation du réservoir 1, montré sur la figure 10, bien que représenté de façon simplifiée, peut présenter une enveloppe 7,8 telle que décrite ci-dessus. Cette enveloppe 7,8 est représentée comme ayant une forme sphérique et présentant un embout 9 délimitant une ouverture 11, centrée sur un diamètre X-X de ladite enveloppe. De façon semblable à ce qui est représenté sur les figures 2 à 6, un raccord 21 est fixé sur l'embout 9 de façon étanche, grâce à un joint 23 et à des moyens de fixation 24 (seulement représentés par la ligne de leur axe). On remarquera que, à la place du raccord 21, on pourrait relier sur l'embout 9 le raccord 34 montré par la figure 7, ou bien encore l'un quelconque des raccords décrits ci-après. Ce raccord 21 délimite un orifice 22 (non représenté, mais visible sur les figures 2 à 6) en communication avec l'intérieur de l'enveloppe 7,8 par l'intermédiaire de l'ouverture 11 et du raccord 21.

Dans l'ouverture 11 est prévu un palier de coulissement 19, percé d'ouvertures 20 de façon à permettre les échanges gazeux de part et d'autre dudit palier 19. Le palier 19 guide en coulissement un organe 18 en forme de tige, susceptible de coulisser le long du diamètre X-X.

Du côté du raccord 21, l'organe 18 est solidaire de moyens de contrôle du courant gazeux 27,31,32 ou 46, non représentés sur la présente figure 10, mais visibles sur les figures 2 à 7.

Du côté du réservoir 1, au lieu d'être relié à l'enveloppe 7,8 par une tige 14 comme cela est montré ci-dessus, l'organe de manoeuvre 18 des moyens de contrôle du courant gazeux est articulé à un pantographe 60. Ce pantographe 60 est disposé à l'intérieur du réservoir et ses quatre branches 61 à 64 sont par exemple de longueurs égales. L'articulation 65 entre les branches 61 et 64 se trouve de préférence sur le diamètre X-X et est éventuellement fixée à la paroi interne du réservoir 1. L'articulation 67 entre les branches 62 et 63 se trouve de préférence également sur le diamètre X-X et est solidaire de l'extrémité en regard de l'organe de manoeuvre 18. Les articulations 66 et 68, respectivement entre les branches 61,62 et 63,64, sont en appui contre la paroi interne du réservoir 1. Cet appui est assuré par un ressort 69 tendant à presser l'organe de manoeuvre 18 vers l'intérieur dudit réservoir 1.

La forme du pantographe 60 dépend du volume du réservoir 1, de sorte que la position de l'organe de manoeuvre 18 le long de l'axe X-X dépend égalemnt dudit volume. Sur la figure 10, on a représenté, en traits pleins et en traits mixtes, la position du réservoir 1, du pantographe 60 et de l'organe de manoeuvre 18, respectivement lorsque ledit réservoir 1 est gonflé et dégonflé.

Ainsi, le pantographe 60 joue, dans le réservoir 1 de la présente figure 10, le même rôle que la tige 14, de sorte que le fonctionnement de ce réservoir 1 est le même que celui des modes de réalisation décrits ci-dessus.

Dans la variante de réalisation représentée sur la figure 11, l'embout 10 du réservoir 1, diamètralement opposé à l'embout 9, est fixé à un bâti rigide 70, par l'intermédiaire de moyens de fixation 71. Par ailleurs, sur ledit embout 9 est fixé, par l'intermédiaire d'un joint 23 et de moyens de fixation 24, un raccord 72 comportant un orifice 22, disposé latéralement et en communication avec l'intérieur du réservoir 1 par l'intermédiaire de l'ouverture 11 et d'un passage 26. A l'intérieur du passage 26 est disposé un noyau 31,32, comme cela est montré sur les figures 5 et 6.

De façon identique à ce qui a été décrit ci-dessus, le noyau 31,32 est destiné à contrôler le courant gazeux passant à travers le passage 26.

Ce noyau 31,32 est solidaire de l'organe de manoeuvre 18, qui traverse de façon étanche - grâce à un joint 73 - ledit raccord 72, du côté de celui-ci opposé au réservoir 1. De plus, l'organe de manoeuvre 18 est rendu solidaire du bâti rigide 70, par exemple par l'intermédiaire de moyens de fixation 74.

Ainsi, lorsque le réservoir 1 se dilate ou se rétracte, ledit organe de manoeuvre sert de palier de glissement pour l'extrémité dudit réservoir opposée aux moyens de fixation 71, de sorte que le noyau 31,32, ferme (ou ouvre) plus ou moins le passage 26 au courant gaz eux, comme cela a été expliqué ci-dessus.

Le bâti extérieur 70 joue donc le rôle de la tige rigide 14.

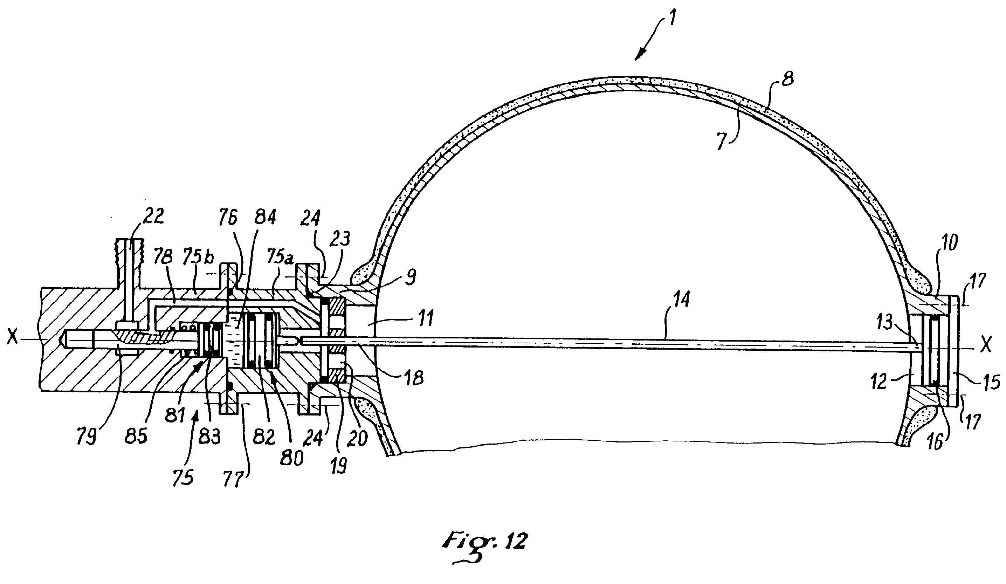

Dans le mode de réalisation du réservoir 1 montré par la figure 12, on retrouve les différents éléments 7 à 20 et 22 à 24, décrits en regard de la figure 2. Toutefois, dans ce cas, le raccord 21 est remplacé par un raccord 75, en deux parties 75a et 75b, reliés l'un à l'autre de façon étanche par un joint 76 et des moyens de fixation 77 (simplement représentés par leurs axes). Le raccord 75 délimite l'orifice 22, disposé latéralement, cet orifice pouvant être mis en communication avec l'intérieur du réservoir 1, par l'intermédiaire d'au moins un conduit 78 traversant ledit raccord 75. La communication gazeuse entre l'orifice 22 et le conduit 78 est contrôlée par un tiroir coulissant 79.

A l'intérieur du raccord 75, est disposé un système hydraulique de transmission de mouvement, comprenant deux vérins 80 et 81 de diamètres différents. Les vérins 80 et 81 sont disposés en série de façon que leurs pistons respectifs 82 et 83 délimitent entre eux une chambre intermédiaire 84 emplie d'un fluide hydraulique.

L'organe de manoeuvre 18 (c'est-à-dire dans ce cas l'extrémité de la tige 14 disposée du côté du raccord 75) est en appui contre le piston de plus grand diamètre 82, tandis que le tiroir 79 est solidaire du piston de plus petit diamètre 83. Par ailleurs, un ressort 85 tend à presser les pistons 82 et 83 en direction dudit organe de manoeuvre 18.

A cause de la différence de diamètres des vérins 80 et 81, on voit que ledit système hydraulique de transmission de mouvement sert d'amplificateur de déplacement dans le cas de la décharge du réservoir 1. Ainsi, un petit déplacement relatif entre l'organe de manoeuvre 18 et le réservoir 1 est transformé en un plus grand déplacement relatif entre le tiroir 79 et ledit réservoir. Il en résulte que la régulation du courant gaz eux à travers l'orifice 22 est rendue plus sensible à la variation de pression à l'intérieur du réservoir 1.

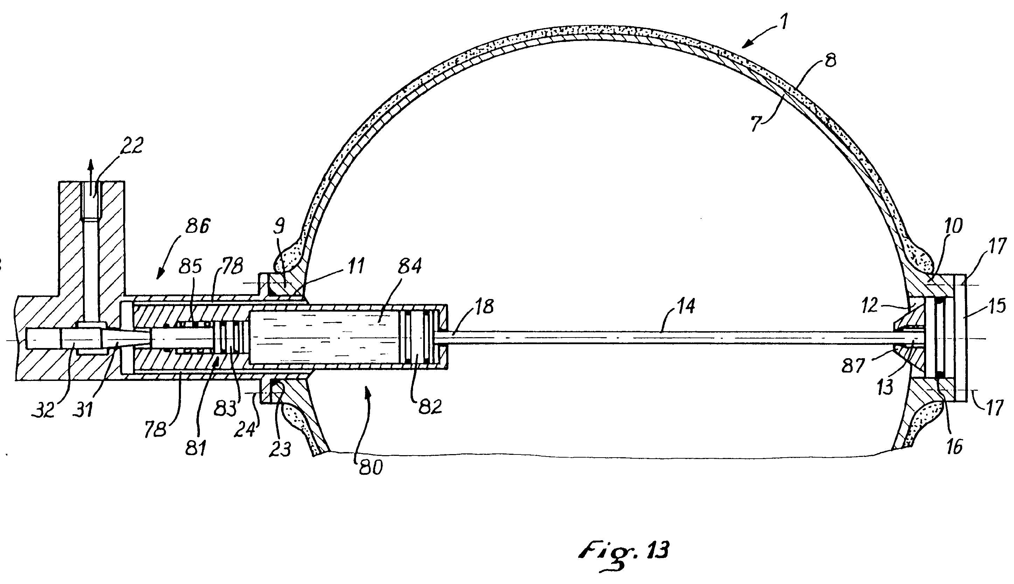

Dans la variante de réalisation de la figure 13, on a prévu un raccord 86 légèrement différent du raccord 75 de la figure 12. Dans ce cas, le raccord 86 pénètre en partie à l'intérieur du réservoir 1 en bouchant l'ouverture 11, ce qui permet la suppression du palier 19, l'organe de manoeuvre 18 étant solidaire du plus grand piston 82. L'extrémité 13 de la tige 14 peut alors être en simple appui contre le bouchon 15, en étant guidée par un palier 87 solidaire de celui-ci. Le ou les conduits 78 débouchent directement dans le réservoir 1 (et non plus dans l'ouverture 11) et le tiroir 79 a été remplacé par un noyau 31,32.

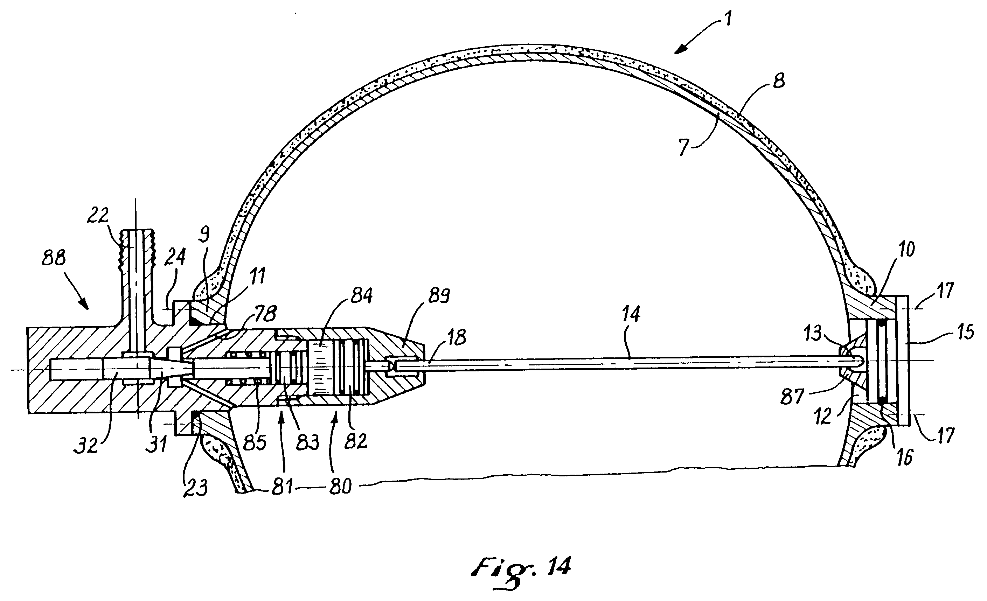

La variante de réalisation de la figure 14 est très proche de celle de la figure 13. Toutefois, dans ce cas, l'organe de manoeuvre 18 est en appui contre le plus grand piston 82 et le raccord 88 correspondant comporte un palier de coulissement 89 pour ledit organe de manoeuvre.

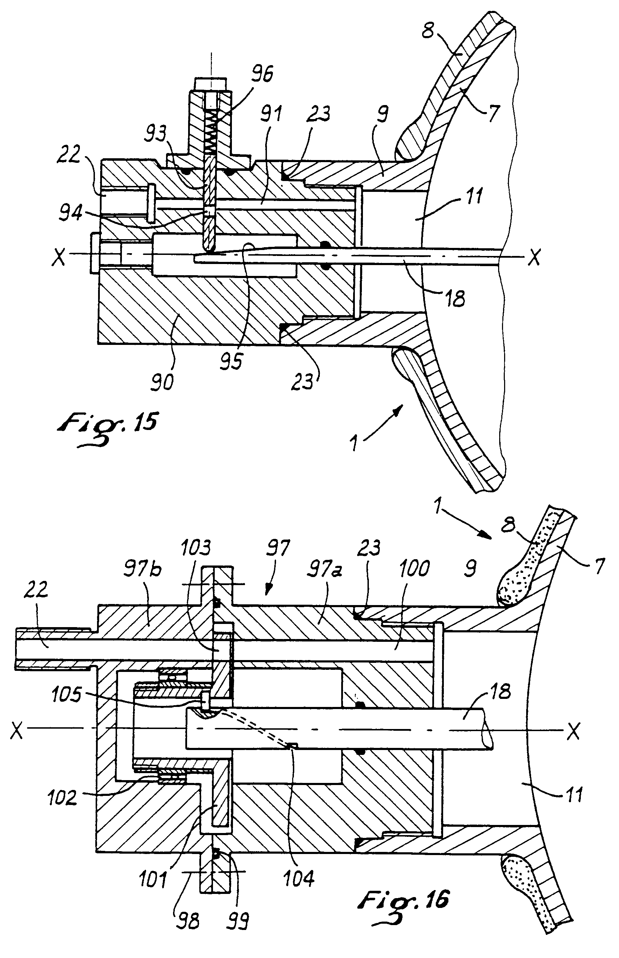

Le raccord 90, montré par la figure 15, est rapporté sur l'embout 9 par vissage, avec interposition d'un joint 23. Il délimite l'orifice 22 en communication gazeuse avec le réservoir 1 par un conduit 91. Le contrôle du courant gazeux dans le conduit 91 est réalisé par une guillotine 93, percé d'un orifice 94, mobile transversalement au diamètre X-X. L'organe de manoeuvre 18, guidé en coulissement par ledit raccord 90, est pourvu à son extrémité libre d'une rampe 95, contre laquelle ladite guillotine 93 est pressée élastiquement par un ressort 96. On voit ainsi que en fonction de la pression dans le réservoir 1, la guillotine 93 est plus ou moins déplacée par la rampe 95 de l'organe de manoeuvre 18 coulissant le long du diamètre X-X, de sorte que son orifice 94 est plus ou moins en coïncidence avec le conduit 91, ce qui délimite dans ce dernier une section de passage variable en fonction de ladite pression, cette section de passage pouvant être nulle si l'orifice 94 est suffisamment excentré pour que la guillotine 93 obture le conduit 91.

Le raccord 97, montré par la figure 16, est réalisé en deux parties 97a et 97b assemblées l'une à l'autre de façon étanche grâce à des moyens de fixation 98 (simplement représentés par leurs axes), et à un joint 99. Il est rapporté sur l'embout 9 par vissage, avec interposition d'un joint 23. Il délimite l'orifice 22 en communication gazeuse avec le réservoir 1 par un conduit 100. A l'intérieur du raccord 97 est monté un volet 101 susceptible de tourner autour de l'axe X-X, par exemple grâce à un roulement à billes 102. Le volet 101 comporte un orifice 103 pouvant être amené plus ou moins en coïncidence avec le conduit 100, en fonction de la position du volet 101 autour de son axe de rotation. L'organe de manoeuvre 18 comporte une rainure hélicoïdale 104, dans laquelle est engagé un pion 105, lié au volet rotatif 101. Ainsi, l'organe 18 subit un déplacement relatif le long du diamètre X-X sous l'effet de la pression régnant à l'intérieur du réservoir 1, il entraîne en rotation ledit volet 101 de sorte que l'orifice 103 peut être plus ou moins en coïncidence avec le conduit 100. On peut ainsi commander une section de passage variable à l'intérieur du conduit 100, celui-ci pouvant être obturé par le volet 101, lorsque la rotation est suffisante pour complètement excentrer l'orifice 103 par rapport au conduit 100.

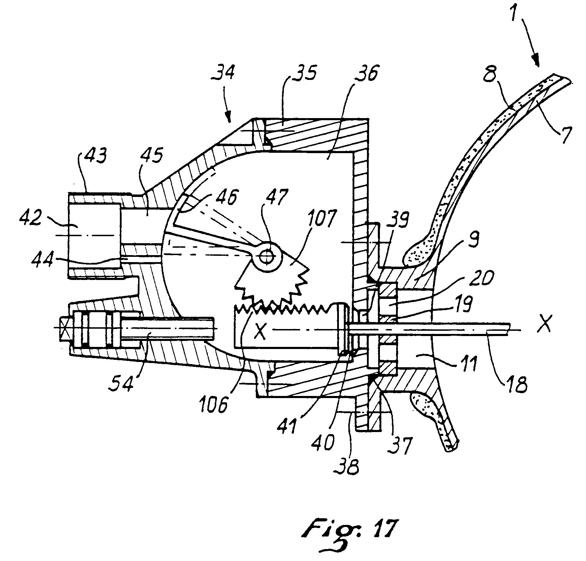

Sur la figure 17, on a représenté un raccord 34 semblable pour l'essentiel au raccord de même référence décrit en regard de la figure 7. On y retrouve notamment les éléments 9,11,18 à 20,35 à 47 et 54. Dans cette variante de réalisation, la commande en rotation du volet 46 autour de son axe 47 (orthogonal au diamètre X-X) est obtenue par l'intermédiaire d'une crémaillère 106, solidaire de l'organe de manoeuvre 18, coopérant avec un secteur denté 107, solidaire du volet 46, plus grâce à la 49 à la came et au palpeur 50.

## Revendications

1. Réservoir (1) de gaz sous pression comportant une enveloppe (7,8) en communication avec un orifice (22,42) susceptible de relier l'intérieur dudit reservoir (1) avec l'extérieur, ainsi que des moyens (27, 31, 32, 46) de commande de l'ouverture et de la fermeture de ladite communication,
caractérisé :
- en ce que ladite enveloppe (7,8) est réalisée de façon à être élastiquement déformable en fonction de la pression du gaz contenu dans ledit réservoir (1) ; et
- en ce que lesdits moyens de commande (27, 31, 32, 46) sont actionnés, par l'intermédiaire d'un organe d'actionnement lié à ladite enveloppe, par la déformation de ladite enveloppe sous l'effet dudit gaz sous pression, pour former des moyens de contrôle du courant gazeux a travers ledit orifice (22,42) de façon que :
- au remplissage dudit réservoir, lesdits moyens de contrôle interrompent ladite communication des que la pression interne dudit reservoir atteint une valeur prédéterminée; et
- au vidage dudit réservoir, ladite communication est fonction de ladite pression interne.

2. Réservoir selon la revendication 1,
caractérisé en ce qu'il comporte un élément rigide (14), disposé à l'intérieur de ladite enveloppe et en appui par une de ses extrémités (13) contre ledit réservoir (1), lesdits moyens de contrôle étant commandes par l'autre (18) desdites extrémités dudit élément rigide (14).

3. Réservoir selon la revendication 2,
caractérisé en ce que ledit élément rigide (14) est fixé par une de ses extrémités (13) audit réservoir (1) et en ce que l'autre (18) desdites extrémités traverse ladite ouverture (11).

4. Réservoir selon la revendication 1,
caractérisé en ce que ladite enveloppe (7,8) présente une forme de révolution et en ce que ledit élément rigide (14) est disposé le long de l'axe (X-X) de ladite enveloppe.

5. Réservoir selon la revendication 4,
caractérisé en ce que ladite enveloppe (7,8) est sphérique et en ce que ledit élément rigide (14) est diamétral.

6. Réservoir selon la revendication 3,
caractérisé en ce qu'il comporte un palier de coulissement (19) disposé dans ladite ouverture (11) pour guider l'extrémité (18) correspondante dudit élément rigide (14), ledit palier de coulissement (19) permettant la libre communication gazeuse entre ledit orifice (22,42) et ladite enveloppe (7,8).

7. Réservoir selon la revendication 1,
caractérisé en ce que ladite enveloppe est constituée d'une chemise interne (7) et d'une coque externe filamentaire (8).

8. Réservoir selon la revendication 7,
caractérisé en ce que ladite chemise interne (7) est plastiquement déformable et mise sous précontrainte par ladite coque externe filamentaire (8).

9. Réservoir selon la revendication 2,
caractérisé en ce que lesdits moyens de contrôle du courant gazeux comportent une soupape (27,41) susceptible de coopérer avec un siège (28,40) pratiqué dans une paroi (25,25a,35), séparant ladie ouverture (11) dudit orifice (22,42) et percée d'un passage (26,26a,39) traversé avec jeu par ledit élément rigide (14).

10. Réservoir selon la revendication 1,
caractérisé en ce que lesdits moyens de contrôle du courant gazeux comportent un noyau (31,32) à section variable susceptible de coopérer avec un passage (26,26b) pratiqué dans une paroi (25,25a) séparant ladite ouverture (11) dudit orifice (22), pour offrir au courant gazeux une section de passage variable en fonction de la pression interne dudit réservoir.

11. Réservoir selon la revendication 1,
caractérisé en ce que lesdits moyens de contrôle du courant gazeux comportent un volet mobile (46).

12. Réservoir selon la revendication 11,
caractérisé en ce que lesdits moyens de contrôle du courant gazeux comportent une came (49) solidaire dudit élément rigide (14) et commandant ledit volet mobile (46).

13. Réservoir selon l'une des revendications 11 ou 12,
caractérisé en ce que ledit orifice (42) est en communication avec ladite ouverture (11) à travers deux passages (45,44) de diamètres différents, montés en parallèle, le plus grand (45) desdits passages étant obturable par ledit volet mobile (46).

14. Réservoir selon la revendication 2,
caractérisé en ce qu'il comporte des moyens (54) pour bloquer ledit élément rigide (14) en translation lorsque, ledit réservoir étant rempli, le courant gaz eux entre ledit orifice (22,42) et ladite ouverture (11) est interrompu par lesdits moyens de contrôle.

15. Réservoir (1) de gaz sous pression selon la revendication 1,
caractérisé en ce qu il comporte une structure déformable (60) disposée à l'intérieur de ladite enveloppe (7,8) et reliée en plusieurs points (65,66,68) à celle-ci, ladite structure déformable commandant la position dudit organe d'actionnement (18).

16. Réservoir selon la revendication 15,
caractérisé en ce qu'il comporte des moyens élastiques (69) tendant à presser ladite structure déformable (60) contre la paroi interne de ladite enveloppe.

17. Réservoir (1) de gaz sous pression selon la revendication 1,
caractérisé en ce qu'il comporte un élément rigide (70), extérieur audit réservoir (1), lié, d'un côté, à la paroi dudit réservoir (1) et, de l'autre côté, audit organe d'actionnement.

18. Réservoir selon la revendication 17,
caractérisé en ce que ledit organe d'actionnement (18) forme un axe de support en coulissement pour ladite enveloppe (7,8).

19. Réservoir (1) de gaz sous pression selon la revendication 1,
caractérisé en ce que, entre ledit organe d'actionnement et lesdits moyens de contrôle, est disposé un système hydraulique de transmission de mouvement (80,81).

20. Réservoir selon la revendication 19,
caractérisé en ce que ledit système hydraulique est constitué de l'ensemble de deux vérins (80,81) de diamètres différents disposés en série de façon que les deux pistons (82,83) dudit système hydraulique délimitent entre eux une chambre intermédiaire (84) emplie d'un fluide hydraulique et en ce que ledit organe d'actionnement (18) est relié au piston (82) de plus grand diamètre, tandis que lesdits moyens de contrôle sont reliés au piston (83) de plus petit diamètre.

21. Réservoir selon la revendication 20,
caractérisé en ce qu il comporte des moyens élastiques (85) tendant à presser lesdits pistons en direction dudit organe d'actionnement.

22. Réservoir (1) de gaz sous pression selon la revendication 1,
caractérisé en ce que lesdits moyens de contrôle du courant gaz eux comportent un système de guillotine (93) déplacé par ledit organe d'actionnement (18), transversalement au déplacement relatif de celui-ci par rapport à ladite enveloppe.

23. Réservoir selon la revendication 22,
caractérisé en ce qu'une extrémité dudit organe d'actionnement (18) présente la forme d'une rampe (95) contre laquelle ledit système de guillotine (93) est pressé par des moyens élastiques (96).

24. Réservoir (1) de gaz sous pression selon la revendication 1,
caractérisé en ce que lesdits moyens de contrôle du courant gazeux comportent un volet rotatif (101) qui est actionné par ledit organe d'actionnement et dont l'axe de rotation est parallèle à la direction du déplacement relatif dudit organe d'actionnement (18) par rapport à ladite enveloppe.

25. Réservoir selon la revendication 24,
caractérisé en ce que la rotation dudit volet rotatif (101) est commandée par ledit organe d'actionnement (18), par l'intermédiaire d'un système à rampe hélicoïdale (104).

26. Réservoir (1) de gaz sous pression selon la revendication 1,
caractérisé en ce que lesdits moyens de contrôle du courant gazeux comportent un volet rotatif (46), qui est actionné par ledit organe d'actionnement par l'intermédiaire d'un système à crémaillère (106) et dont l'axe de rotation (47) est orthogonal à la direction de déplacement relatif dudit organe d'actionnement (18) par rapport à ladite enveloppe.

## Patentansprüche

1. Gasdruckbehälter (1) mit einem Hülle (7, 8), die in Verbindung mit einem Durchbruch (22, 42) steht, welche das Innere des besagten Behälters (1) mit dem äußeren verbinden kann, sowie mit Mitteln (27, 31, 32, 46) zur Steuerung des Öffnens und des Schließens der besagten Verbindung, dadurch gekennzeichnet, daß
- die besagte Hülle (7, 8) so ausgeführt ist, daß sie in Abhängigkeit des Druckes des in dem Behälter (1) enthaltenen Gases elastisch verformbar ist, und
- die besagten Steuerungsmittel (27, 31, 32, 46) über ein mit der besagten Hülle verbundenes Betätigungsorgan, durch die Verformung der besagten Hülle unter der Wirkung des besagten unter Druck stehenden Gases, betätigt werden, um Mittel zur Kontrolle des Gasstromes durch den besagten Durchbruch (22, 42) zu bilden, so daß
- beim Füllen des besagten Behälters die besagten Kontrollmittel die besagte Verbindung unterbrechen, sobald der innere Druck des besagten Behälter einen festgelegten Wert erreicht, und
- beim Entleeren des besagten Behälters die besagte Verbindung abhängig ist von dem besagten inneren Druck.

2. Behälter nach dem Anspruch 1,
dadurch gekennzeichnet, daß er ein steifes Element (14) enthält, welches im Innern der besagten Hülle angeordnet ist und mit einem seiner Enden (13) sich an dem besagten Behälter (1) abstützt, wobei die besagten Kontrollmittel durch das andere (18) der besagten Enden des besagten steifen Elementes (14) gesteuert werden.

3. Behälter nach dem Anspruch 2,
dadurch gekennzeichnet, daß das besagte steife Element (14) mit einem seiner Enden (13) an dem besagten Behälter (1) befestigt ist und daß das andere (18) der besagten Enden die besagte Öffnung (11) durchquert.

4. Behälter nach dem Anspruch 1,
dadurch gekennzeichnet, daß die besagte Hülle (7, 8) eine Umdrehungsform aufweist und daß das besagte steife Element (14) entlang der Achse (X-X) der besagten Hülle angeordnet ist.

5. Behälter nach dem Anspruch 4,
dadurch gekennzeichnet, daß die besagte Hülle (7, 8) sphärisch ist und daß das besagte steife Element (14) diamentral ist.

6. Behälter nach dem Anspruch 3,
dadurch gekennzeichnet, daß er ein Gleitlager (19) enthält, das in dem besagten Durchbruch (11) angeordnet ist zur Führung des entsprechenden Endes (18) des besagten steifen Elementes (14), wobei das besagte Gleitlager (19) die freie Gasverbindung zwischen der besagten Öffnung (22, 42) und der besagten Hülle (7, 8) gestattet.

7. Behälter nach dem Anspruch 1,
dadurch gekennzeichnet, daß die besagte Hülle aus einem inneren Mantel (7) und einer äußeren faserigen Schale (8) besteht.

8. Behälter nach dem Anspruch 7,
dadurch gekennzeichnet, daß der besagte innere Mantel (7) plastisch verformbar ist und durch die besagte äußere faserige Schale (8) vorgespannt wird.

9. Behälter nach dem Anspruch 2,
dadurch gekennzeichnet, daß die besagten Mittel zur Kontrolle des Gasstromes ein Ventil (27, 41) enthalten, das mit einem Sitz (28, 40), der in einer Wandung (25, 25a, 35 angebracht ist, welche die besagte Öffnung (11) von dem besagten Durchbruch (22, 42) trennt und von einem Durchgang (26, 26a, 39) durchbohrt ist, welcher durch das besagte steife Element (14) mit Spiel durchquert wird, zusammenwirkt.

10. Behälter nach dem Anspruch 1,
dadurch gekennzeichnet, daß die besagten Mittel zur Kontrolle des Gasstromes einen Kern (31, 32) mit variablem Querschnitt enthalten, der mit einem Durchgang (26, 26b), welcher in einer Wandung (25, 25a), welche die besagte Öffnung (11) von dem besagten Durchbruch (22) trennt, angebracht ist, zusammenwirken kann, um dem Gastrom einen variablen Durchgangsquerschnitt in Abhängigkeit des inneren Drucks des besagten Behälters zu bieten.

11. Behälter nach dem Anspruch 1,
dadurch gekennzeichnet, daß die besagten Mittel zur Kontrolle des Gasstromes eine bewegliche Klappe (46) enthalten.

12. Behälter nach dem Anspruch 11,
dadurch gekennzeichnet, daß die besagten Mittel zur Kontrolle des Gasstromes einen mit dem besagten steifen Element (14) fest verbundenen Nocken (49) enthalten, welcher die besagte bewegliche Klappe (46) steuert.

13. Behälter nach einem der Ansprüche 11 oder 12,
dadurch gekennzeichnet, daß der besagte Durchbruch (42) mit der besagten Öffnung (11) über zwei Durchgänge (45, 44) mit verschiedenen Durchmessern und parallel montiert in Verbindung steht, wobei der größte (45) der besagten Durch- gänge durch die besagte bewegliche Klappe (46) verschließbar ist.

14. Behälter nach dem Anspruch 2,
dadurch gekennzeichnet, daß er Mittel (54) enthält, um das besagte steife Element (14) in der Verschiebung zu blockieren, falls, wenn der Behälter gefüllt ist, der Gasstrom zwischen dem besagten Durchbruch (22, 42) und der besagten Öffnung (11) durch die besagten Kontrollmittel unterbrochen wird.

15. Gasdruckbehälter (1) nach dem Anspruch 1,
dadurch gekennzeichnet, daß er eine verformbare Struktur (60) aufweist, die im Innern der besagten Hülle (7, 8) angebracht ist und an mehreren Punkten (65, 66, 68) mit dieser verbunden ist, wobei die besagte verformbare Struktur die Stellung des besagten Betätigungsorgans (18) steuert.

16. Behälter nach dem Anspruch 15,
dadurch gekennzeichnet, daß er elastische Mittel (69) enthält, welche die besagte verformbare Struktur (60) gegen die innere Wandung der besagten Hülle drücken können.

17. Gasdruckbehälter (1) nach dem Anspruch 1,
dadurch gekennzeichnet, daß er ein steifes Element (70) enthält, das außerhalb des besagten Behälters (1) angebracht ist und auf einer Seite mit der Wandung des besagten Behälters (1) und auf der anderen Seite mit dem besagten Betätigungsorgan verbunden ist.

18. Behälter nach dem Anspruch 17,
dadurch gekennzeichnet, daß das besagte Betätigungsorgan (18) eine gleitende Tragachse für die besagte Hülle (7, 8) bildet.

19. Gasdruckbehälter (1) nach dem Anspruch 1,
dadurch gekennzeichnet, daß zwischen dem besagten Betätigungsorgan und den besagten Kontrollmitteln ein hydraulisches System zur Bewegungsübertragung (80, 81) angeordnet ist.

20. Behälter nach dem Anspruch 19,
dadurch gekennzeichnet, daß das besagte hydraulische System aus zwei Zylindern (80, 81) von verschiedenen Durchmessern besteht, welche in Reihe angeordnet sind, so daß die zwei Kolben (82, 83) des besagten hydraulischen Systems unter sich eine Zwischenkammer (84), die mit einem hydraulischen Fluid gefüllt ist, abgrenzen und daß das besagte Betätigungsorgan (18) mit dem Kolben (82) mit dem größten Durchmesser verbunden ist, während die besagten Kontrollmittel mit dem Kolben (83) mit dem kleineren Durchmesser verbunden sind.

21. Behälter nach dem Anspruch 20,
dadurch gekennzeichnet, daß er elastische Mittel (85) enthält, welche die besagten Kolben in Richtung des besagten Betätigungsorgans drücken können.

22. Gasdruckbehälter (1) nach dem Anspruch 1,
dadurch gekennzeichnet, daß die besagten Mittel zur Kontrolle des Gasstroms ein Guillotinensystem (93) enthalten, welches durch das besagte Betätigungsorgan (18) quer zur entsprechenden Bewegung von diesem in Bezug auf die besagte Hülle verschoben wird.

23. Behälter nach dem Anspruch 22,
dadurch gekennzeichnet, daß ein Ende des besagten Betätigungsorgans (18) die Form einer schiefen Ebene (95) aufweist, gegen welche das besagte Guillotinensystem (93) durch elastische Mittel (96) gedrückt wird.

24. Gasdrückbehälter (1) nach dem Anspruch 1,
dadurch gekennzeichnet, daß die besagten Mittel zur Kontrolle des Gasstromes eine drehbare Klappe (101) enthalten, welche durch das besagte Betätigungsorgan betätigt wird und dessen Drehachse parallel zur entsprechenden Bewegungsrichtung des besagten Betätigungsorgans (18) in Bezug auf die besagte Hülle ist.

25. Behälter nach dem Anspruch 24,
dadurch gekennzeichnet, daß die Drehung der besagten drehbaren Klappe (101) durch das besagte Betätigungsorgan (18) mittels eines System mit spiralförmiger schiefer Ebene (104) gesteuert wird.

26. Gasdruckbehälter (1) nach dem Anspruch 1,
dadurch gekennzeichnet, daß die besagten Mittel zur Kontrolle des Gasstromes eine drehbare Klappe (46) enthalten, welche durch das besagte Betätigungsorgan über ein Zahnstangensystem (106) betätigt wird und deren Drehachse (47) senkrecht zur entsprechenden Bewegungsrichtung des besagten Betätigungsorgans (18) in Bezug auf die besagte Hülle ist.

## Claims

1. Pressurised gas tank (1) including a casing (7, 8) which is connected with an orifice (22, 42) capable of joining the inside of the said tank (1) with the outside, as well as means (27, 31, 32, 46) for controlling the opening and the closing of the said connection, characterised:
- in that the said casing (7, 8) is made so as to be elastically deformable as a function of the pressure of the gas contained in the said tank (1); and
- in that the said control means (27, 31, 32, 46) are actuated, via an actuation member joined to the said casing, by the deformation of the said casing under the effect of the said pressurised gas, in order to form means for controlling the gas flow through the said orifice (22, 42), so that:
- when the said tank is being filled, the said control means interrupt the said connection when the internal pressure of the said tank reaches a predetermined value; and
- when the said tank is being emptied, the said connection is a function of the said internal pressure.

2. Tank according to Claim 1, characterised in that it includes a rigid element (14) located inside the said casing and bearing via one of its ends (13) against the said tank (1), the said control means being controlled by the other (18) of the said ends of the said rigid element (14).

3. Tank according to Claim 2, characterised in that the said rigid element (14) is fixed by one of its ends (13) to the said tank (1), and in that the other (18) of the said ends passes through the said opening (11).

4. Tank according to Claim 1, characterised in that the said casing (7, 8) has a shape of revolution, and in that the said rigid element (14) is arranged along the axis (X-X) of the said casing.

5. Tank according to Claim 4, characterised in that the said casing (7, 8) is spherical, and in that the said rigid element (14) is diametral.

6. Tank according to Claim 3, characterised in that it includes a slide bearing (19) located in the said opening (11) for guiding the corresponding end (18) of the said rigid element (14), the said slide bearing (19) allowing free gas connection between the said orifice (22, 42) and the said casing (7, 8).

7. Tank according to Claim 1, characterised in that the said casing consists of an internal liner (7) and an external filamentary shell (8).

8. Tank according to Claim 7, characterised in that the said internal liner (7) is plastically deformable and prestressed by the said external filamentary shell (8).

9. Tank according to Claim 2, characterised in that the said means controlling the gas flow include a valve (27, 41), which can interact with a seat (28, 40) made in a wall (25, 25a, 35), which separates the said opening (11) from the said orifice (22, 42) and is pierced by a passage (26, 26a, 39) passed through with clearance by the said rigid element (14).

10. Tank according to Claim 1, characterised in that the said means for controlling the gas flow include a core (31, 32) of variable cross-section which can interact with a passage (26, 26b) made in a wall (25, 25a) separating the said opening (11) from the said orifice (22), in order to provide for the gas flow a passage cross-section which varies as a function of the internal pressure of the said tank.

11. Tank according to Claim 1, characterised in that the said means for controlling the gas flow include a moving flap (46).

12. Tank according to Claim 11, characterised in that the said means for controlling the gas flow include a cam (49), integral with the said rigid element (14) and controlling the said moving flap (46).

13. Tank according to one of Claims 11 or 12, characterised in that the said orifice (42) is connected with the said opening (11) through two passages (45, 44) of different diameters, which are mounted in parallel, the larger (45) of the said passages being closable by the said moving flap (46).

14. Tank according to Claim 2, characterised in that it includes means (54) for blocking the said rigid element (14) in translation, when, the said tank being full, the gas flow between the said orifice (22, 42) and the said opening (11) is interrupted by the said control means.

15. Pressurised gas tank (1) according to Claim 1, characterised in that it includes a deformable structure (60), located inside the said casing (7, 8) and joined at several points (65, 66, 68) to the latter, the said deformable structure controlling the position of the said actuation member (18).

16. Tank according to Claim 15, characterised in that it includes elastic means (69) tending to press the said deformable structure (60) against the internal wall of the said casing.

17. Pressurised gas tank (1) according to Claim 1, characterised in that it includes a rigid element (70), external to the said tank (1), joined, on the one hand, to the wall of the said tank (1) and, on the other hand, to the said actuation member.

18. Tank according to Claim 17, characterised in that the said actuation member (18) forms a sliding-support spindle for the said casing (7, 8).

19. Pressurised gas tank (1) according to Claim 1, characterised in that, between the said actuation member and the said control means, a hydraulic movement transmission system (80, 81) is arranged.

20. Tank according to Claim 19, characterised in that the said hydraulic system consists of the combination of two jacks (80, 81), of different diameters, arranged in series such that the two pistons (82, 83) of the said hydraulic system together delimit an intermediate chamber (84) filled with a hydraulic fluid, and in that the said actuation member (18) is joined to the piston (82) of larger diameter, whilst the said control means are joined to the piston (83) of smaller diameter.

21. Tank according to Claim 20, characterised in that it includes elastic means (85) tending to press the said pistons in the direction of the said actuation member.

22. Pressurised gas tank (1) according to Claim 1, characterised in that the said means for controlling the gas flow include a guillotine system (93) moved, by the said actuation member (18), transversely to the relative displacement of the latter with respect to the said casing.

23. Tank according to Claim 22, characterised in that one end of the said actuation member (18) has the shape of a ramp (95), against which the said guillotine system (93) is pressed by elastic means (96).

24. Pressurised gas tank (1) according to Claim 1, characterised in that the said means for controlling the said gas flow include a rotary flap (101), which is actuated by the said actuation member, and whose axis of rotation is parallel to the direction of relative displacement of the said actuation member (18) with respect to the said casing.

25. Tank according to Claim 24, characterised in that the rotation of the said rotary flap (101) is controlled by the said actuation member (18), by means of a helical ramp system (104).

26. Pressurised gas tank (1) according to Claim 1, characterised in that the said means for controlling the gas flow include a rotary flap (46), which is actuated by the said actuation member, by means of a rack system (106), and whose axis of rotation (47) is orthogonal to the direction of relative displacement of the said actuation member (18) with respect to the said casing.
